# EUROPÄISCHE PATENTSCHRIFT

(11) **EP 3 508 967 B1**
(45) Veröffentlichungstag und Bekanntmachung des Hinweises auf die Patenterteilung: **01.04.2020**
(21) Anmeldenummer: 18214869.2
(22) Anmeldetag: 20.12.2018
(51) Int. Cl.: G06F 3/0488, B60K 37/06, B60K 35/00

(54) **VERFAHREN ZUM BETREIBEN EINER MENSCH-MASCHINEN-SCHNITTSTELLE SOWIE MENSCH-MASCHINEN-SCHNITTSTELLE**
HUMAN-MACHINE INTERFACE AND METHOD FOR OPERATING A HUMAN-MACHINE INTERFACE
PROCÉDÉ DE FONCTIONNEMENT D'UNE INTERFACE HOMME-MACHINE AINSI QU'INTERFACE HOMME-MACHINE

(30) Priorität: 05.01.2018 DE 102018100196
(43) Veröffentlichungstag der Anmeldung: 10.07.2019
(73) Patentinhaber: BCS Automotive Interface Solutions GmbH, 78315 Radolfzell (DE)
(72) Erfinder: ABT, David, 78315 Radolfzell (DE); LEMCKE, Sören, 78315 Radolfzell (DE); POMYTKIN, Nikolaj, 78315 Radolfzell (DE)
(74) Vertreter: Prinz & Partner mbB

(56) Entgegenhaltungen:
- DE-A1-102009 059 869
- DE-A1-102015 102 426
- US-A1- 2008 163 131
- US-A1- 2016 054 914

## Beschreibung

Die Erfindung betrifft ein Verfahren zum Betreiben einer Mensch-Maschinen-Schnittstelle für ein Fahrzeug sowie eine Mensch-Maschinen-Schnittstelle für ein Fahrzeug.

Mensch-Maschinen-Schnittstellen für Fahrzeuge sind bekannt und weisen immer häufiger eine berührungsempfindliche Oberfläche auf. Die Bedienung von berührungsempfindlichen Oberflächen erfordert jedoch im Vergleich zur Bedienung von Knöpfen eine größere Aufmerksamkeit vom Benutzer, was zu einer Ablenkung des Benutzers führt, insbesondere vom Verkehrsgeschehen.

Aus diesem Grunde sind wichtige Funktionen oder Funktionen, die häufig verwendet werden, üblicherweise durch jeweils einen separaten Knopf einer Mensch-Maschinen-Schnittstelle im Fahrzeug erreichbar. Da für jede Funktion jedoch ein eigener Knopf vorgesehen sein muss, steigt der Platzbedarf.

DE102015102426 offenbart eine Informationenverarbeitungsvorrichtung, umfassend eine Mehrpunkt-erfassbare Berührungskonsole, die Berührungen einer Vielzahl von bedienenden Fingern auf einer Bedienfläche erfasst, und zum Ausführen einer auf einer Anzeigeeinrichtung angezeigten Bildschirmseite verwendet werden, erkennt eine relative Positionsbeziehung von berührten Positionen der bedienenden Finger, für die die Berührungskonsole Berührungen auf der Bedienfläche erfasst; weist eine vorbestimmte entsprechende Funktion jedem der bedienenden Finger für einen Fall zu, in dem einer der bedienenden Finger eine vorbestimmte Aktion durchführt, basierend auf der erkannten relativen Positionsbeziehung der berührten Positionen der bedienenden Finger; und führt, wenn die Berührungskonsole die vorbestimmte Aktion eines beliebigen der bedienenden Finger erfasst, die vorbestimmte entsprechende Funktion aus.

Es ist daher Aufgabe der Erfindung, ein Verfahren zum Betreiben einer Mensch-Maschinen-Schnittstelle sowie eine Mensch-Maschinen-Schnittstelle bereitzustellen, die sowohl einen einfachen Zugriff auf eine Vielzahl an Funktionen ermöglichen als auch wenig Platz benötigen.

Die Aufgabe wird gelöst durch ein Verfahren zum Betreiben einer Mensch-Maschinen-Schnittstelle für ein Fahrzeug mit einer Steuereinheit und wenigstens einer Auswahlfläche, die als berührungsempfindliche Oberfläche ausgeführt ist, und wenigstens einer Bedienfläche, die als berührungsempfindliche Oberfläche ausgeführt ist, wobei die wenigstens eine Auswahlfläche und die wenigstens eine Bedienfläche voneinander getrennt sind, mit den folgenden Schritten:
a) eine Berührung an wenigstens einem beliebigen Berührungspunkt der wenigstens einen Bedienfläche wird erkannt,
b) die Anzahl an Fingern, die die wenigstens eine Auswahlfläche berühren, wird bestimmt, und
c) dem wenigstens einen beliebigen Berührungspunkt an der wenigstens einen Bedienfläche wird anschließend eine Schaltfläche zugeordnet, mittels der eine Eingabe möglich ist,
wobei der Schaltfläche eine Funktion zugeordnet wird, die in Abhängigkeit der Anzahl der Finger, die die wenigstens eine Auswahlfläche berühren, ausgewählt wird.

Auf diese Weise kann die Anzahl der Funktionen, auf die der Benutzer der Mensch-Maschinen-Schnittstelle schnell zugreifen kann, deutlich erhöht werden, ohne dabei die Aufmerksamkeit zu binden. Nach einer kurzen Phase der Eingewöhnung ist eine Bedienung der Mensch-Maschinen-Schnittstelle durch den Benutzer ohne wesentliche Augenbewegung möglich.

Der Begriff "separat" bzw. "voneinander getrennt" meint hier räumlich getrennte berührungsempfindliche Oberflächen und/oder getrennte Flächencontroller der berührungsempfindlichen Oberflächen, die die Berührungsposition bestimmten.

Die wenigstens eine Auswahlfläche und die wenigstens eine Bedienfläche sind insbesondere physische Bedienflächen, die jeweils eine separate berührungsempfindliche Oberfläche darstellen. Lediglich zur besseren Unterscheidung werden die unterschiedlichen Begriffe "Auswahlfläche" und "Bedienfläche" verwendet.

Selbstverständlich kann der Finger auch ein Eingabestift oder Ähnliches sein. Berührungen der berührungsempfindlichen Oberflächen mit dem Handballen können von der Steuereinheit erkannt und ignoriert werden.

Beispielsweise wird die Position und/oder die Funktion der einen Schaltfläche oder der mehreren Schaltflächen durch wenigstens ein optisches Element an der Bedienfläche dargestellt. Hierdurch erhält der Benutzer visuelles Feedback, wodurch die Bedienung vereinfacht wird.

In einer Ausgestaltung der Erfindung wird zur Auswahl der Funktion der Schaltfläche die Anzahl an Fingern an der Auswahlfläche herangezogen, die zum Zeitpunkt der Berührung der Bedienfläche, ein vorbestimmtes Zeitintervall zuvor oder während der Dauer der Berührung ermittelt wurde. Auf diese Weise werden Fehleingaben verhindert.

Beispielsweise wird die Anzahl an Fingern an der Auswahlfläche wiederholt erneut ermittelt und die Funktion der Schaltfläche wird gegebenenfalls angepasst, wodurch die Mensch-Maschinen-Schnittstelle Benutzereingaben schnell verarbeiten kann. Dabei bedeutet "wiederholt" insbesondere regelmäßig oder kontinuierlich.

In einer Ausgestaltung der Erfindung werden mehrere gleichzeitige Berührungen, insbesondere von mehreren Fingern an mehreren Berührungspunkten der Bedienfläche erkannt, wobei mindestens den Berührungspunkten an der Bedienfläche jeweils eine Schaltfläche mit jeweils einer Funktion zugeordnet wird, wodurch die Anzahl an schnell erreichbaren Funktionen weiter vergrößert wird. Dabei kann die Auswahl der Funktion in Abhängigkeit der Anzahl der Finger auf der Auswahlfläche erfolgen.

Vorzugsweise stellen die Funktionen, die den verschiedenen Berührungspunkten bei gleichzeitiger Berührung zugeordnet werden, einen Funktionensatz dar, wobei der verwendete Funktionensatz in Abhängigkeit der Anzahl der Finger auf der wenigstens einen Auswahlfläche ausgewählt wurde. Auf diese Weise lassen sich die Funktionen zusammenfassen, wodurch nicht jede Funktion einzeln geladen werden muss.

Um die Benutzung an die Ergonomie einer menschlichen Hand anzupassen, kann jeder Funktionensatz drei Funktionen umfassen, die den Schaltflächen von drei benachbarten Berührungspunkten zugeordnet werden, insbesondere den Schaltflächen, deren Berührungspunkte durch den Daumen, den Zeigefinger und den Mittelfinger der Hand des Benutzers erzeugt wurden.

In einer Ausführungsvariante wird erkannt, mit welchem Finger die Auswahlfläche und/oder die Bedienfläche bedient wird, wobei die Funktion und/oder der Funktionensatz in Abhängigkeit des verwendeten Fingers ausgewählt wird. Dadurch kann die Anzahl an schnell verfügbaren Funktionen weiter vergrößert werden.

Um die Anzahl an Funktionen noch weiter zu vergrößern kann die Hand erkannt werden, mit der die Auswahlfläche und/oder die Bedienfläche bedient wird, wobei die Funktion und/oder der Funktionensatz in Abhängigkeit der verwendeten Hand ausgewählt wird.

Ferner wird die Aufgabe gelöst durch eine Mensch-Maschinen-Schnittstelle für ein Fahrzeug, die insbesondere dazu eingerichtet ist, das Verfahren gemäß einem der vorhergehenden Ansprüche durchzuführen, mit einer Steuereinheit und wenigstens einer Auswahlfläche, die als berührungsempfindliche Oberfläche ausgeführt ist, und wenigstens einer Bedienfläche, die als berührungsempfindliche Oberfläche ausgeführt ist, wobei die wenigstens eine Auswahlfläche und die wenigstens eine Bedienfläche voneinander getrennt sind und mit der Steuereinheit zur Datenübertragung verbunden sind. Im Betrieb der Mensch-Maschinen-Schnittstelle ist an der Bedienfläche wenigstens eine Schaltfläche vorgesehen, der eine Funktion zugeordnet ist, die in Abhängigkeit der Anzahl der Finger auf der wenigstens einen Auswahlfläche ausgewählt ist.

Bei mehreren Berührungen an mehreren Berührungspunkten gleichzeitig können mehrere Schaltflächen vorgesehen sein, wobei je eine Schaltfläche an je einem der Berührungspunkte angeordnet ist, die berührt wurden.

Beispielsweise weist die Auswahlfläche und/oder die Bedienfläche einen Flächencontroller auf, der die Anzahl und den Ort von wenigstens einer Berührung auf der ihm zugeordneten Auswahlfläche oder Bedienfläche erkennt, wobei der Flächencontroller mit der Steuereinheit zur Übertragung der Anzahl und des Orts der wenigstens einen Berührung auf der ihm zugeordneten berührungsempfindlichen Oberfläche verbunden ist. Auf diese Weise können günstige Standardkomponenten für die die Auswahlfläche und/oder die Bedienfläche verwendet werden.

Beispielsweise ist die Position der Schaltfläche von der Steuereinheit derart bestimmt, dass die Position der Schaltfläche bei einer Berührung der Bedienfläche an einem beliebigen Berührungspunkt von der Steuereinheit auf den Berührungspunkt gesetzt wird, der berührt wurde, wodurch eine einfache Bedienung ermöglicht wird.

In einer Ausführungsvariante ist die wenigstens eine Schaltfläche durch erneute Berührung, Druckerhöhung und/oder Verschieben des Berührungspunktes bedienbar, wodurch eine einfache Bedienung ermöglicht wird. Insbesondere kann die Bedienung durch Gesten erfolgen, beispielweise durch "Drag", d.h. Verschieben des Berührungspunktes, ohne dass anschließend der Finger abgehoben wird.

Die Auswahlfläche und die Bedienfläche können an unterschiedlichen Seiten eines Sitzes, insbesondere des Fahrersitzes vorgesehen sein, um eine Bedienung ohne große Armbewegungen zu ermöglichen.

Um dem Benutzer stets eine Auswahlfläche und eine Bedienfläche in seiner Reichweite anzubieten, kann die Mensch-Maschinen-Schnittstelle wenigstens ein Fahrzeugbauteil aufweisen, wobei die Auswahlfläche und die Bedienfläche an dem wenigstens einen Fahrzeugbauteil angeordnet sind, insbesondere wobei mehrere Fahrzeugbauteile vorgesehen sind, wobei die Auswahlfläche und die Bedienfläche an unterschiedlichen Fahrzeugbauteilen angeordnet sind.

Zum Beispiel erstreckt sich die Bedienfläche über wenigstens 50 %, insbesondere wenigstens 75 % der Oberfläche des jeweiligen Fahrzeugbauteils.

Die Bedienfläche kann unter einer Zieroberfläche des Fahrzeugbauteils angeordnet sein.

Alternativ oder zusätzlich kann die Bedienfläche und/oder das Fahrzeugbauteil ein mechanisches Rückkopplungselement zur haptischen Rückkopplung aufweisen, insbesondere einen Vibrationsmotor, einen Druckwiderstand und/oder eine Ultraschallquelle.

In einer Ausführungsvariante ist das Fahrzeugbauteil ein Lenkrad, ein Sitz, ein Steuerknüppel, eine Türblende, eine Armlehne, ein Teil einer Mittelkonsole, ein Teil eines Armaturenbretts und/oder ein Teil einer Überkopfverkleidung. Dadurch sind die Bedienfläche und die Auswahlfläche für den Benutzer immer einfach zu erreichen.

Um den Benutzer möglichst wenig abzulenken, weist die Mensch-Maschinen-Schnittstelle einen Ausgabebildschirm auf, der räumlich getrennt von der Auswahlfläche, der Bedienfläche und/oder dem Fahrzeugbauteil angeordnet ist, wobei die Funktion der wenigstens einen Schaltfläche auf dem Ausgabebildschirm dargestellt ist.

Weitere Merkmale und Vorteile der Erfindung ergeben sich aus der nachfolgenden Beschreibung sowie aus den beigefügten Zeichnungen, auf die Bezug genommen wird. In den Zeichnungen zeigen:
- Figur 1a) eine perspektivische Ansicht eines Cockpits eines Fahrzeugs, das mit einer erfindungsgemäßen Mensch-Maschinen-Schnittstelle versehen ist,
- Figur 1b) eine schematische Schnittansicht eines Teils des Cockpits gemäß Figur 1a) im Bereich einer Bedienfläche der Mensch-Maschinen-Schnittstelle,
- Figur 2 einen schematischen Schaltplan eines Teils der Mensch-Maschinen-Schnittstelle gemäß Figur 1, und
- die Figuren 3a) bis 3d) sowie 4a) und 4b) Veranschaulichungen des erfindungsgemäßen Verfahrens.

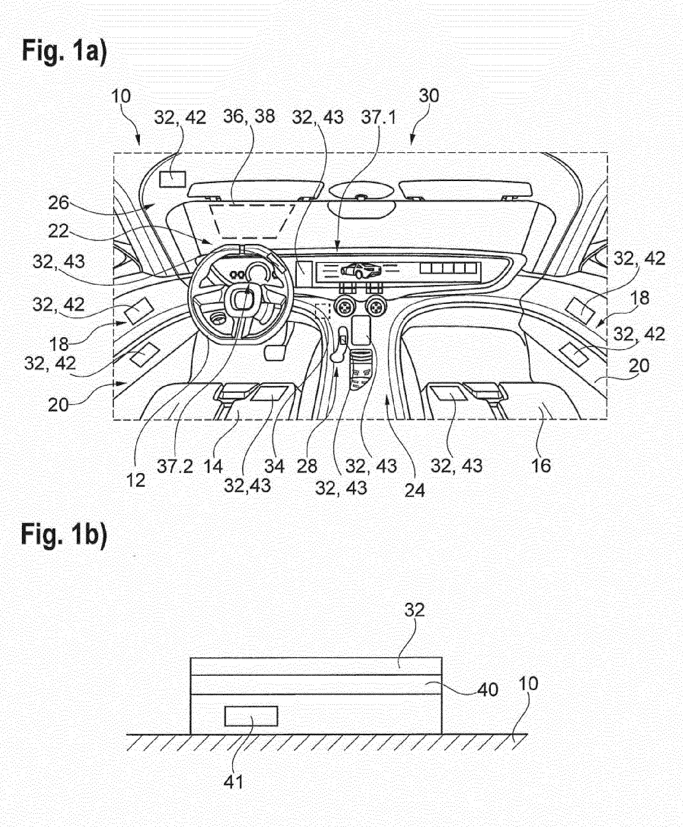

In Figur 1a) ist ein Cockpit eines Fahrzeugs dargestellt.

Das Cockpit weist in üblicher Weise verschiedene Fahrzeugbauteile 10 auf, wie ein Lenkrad 12, einen Fahrersitz 14, einen Beifahrersitz 16, Türblenden 18, Armlehnen 20, ein Armaturenbrett 22, eine Mittelkonsole 24 und Überkopfverkleidungen 26.

Außerdem kann ein Steuerknüppel 28 im Cockpit vorgesehen sein.

Zudem weist das Cockpit eine Mensch-Maschinen-Schnittstelle 30 auf, die im gezeigten Ausführungsbeispiel mehrere berührungsempfindliche Oberflächen 32, eine Steuereinheit 34 und mehrere Ausgabebildschirme 36 umfasst.

Die Steuereinheit 34 ist mit den Ausgabebildschirmen 36 und den berührungsempfindlichen Oberflächen 32 zur Datenübertragung verbunden. Dies kann über ein Kabel oder kabellos geschehen.

Als Ausgabebildschirme 36 sind in Figur 1a) zwei Bildschirme 37.1, 37.2 im Armaturenbrett 22 vorgesehen, und ein Bildschirm eines Head-up-Displays 38 (HUD) dient ebenfalls als Ausgabebildschirm 36.

Im gezeigten Ausführungsbeispiel weist die Mensch-Maschinen-Schnittstelle 30 elf berührungsempfindliche Oberflächen 32 an verschiedenen der Fahrzeugbauteile 10 auf. Die Fahrzeugbauteile 10, an denen die berührungsempfindlichen Oberflächen 32 vorgesehen sind, sind dann Teil der Mensch-Maschinen-Schnittstelle 30.

Die Anzahl an berührungsempfindlichen Oberflächen 32 ist jedoch nur beispielhaft zu verstehen. Die Mensch-Maschinen-Schnittstelle 30 kann ebenso mit einer beliebigen anderen Anzahl an berührungsempfindlichen Oberflächen 32 ausgeführt sein.

In der gezeigten Ausführungsform befinden sich berührungsempfindliche Oberflächen 32 an je einer der Türblenden 18 der Fahrertür bzw. der Beifahrertür oder an dazugehörigen Armlehnen 20.

Ebenfalls ist eine berührungsempfindliche Oberfläche 32 an der Überkopfverkleidung 26 im Fahrerbereich angeordnet.

Eine weitere berührungsempfindliche Oberfläche 32 ist am Lenkrad 12 vorgesehen, wobei in Figur 1a) die berührungsempfindliche Oberfläche 32 auf der Vorderseite des Lenkrads 12 dargestellt ist. Möglich und vorteilhaft ist es auch, wenn sich die berührungsempfindliche Oberfläche 32 auf die Rückseite des Lenkrads 12 erstreckt oder nur dort ausgebildet ist.

Weiterhin ist eine berührungsempfindliche Oberfläche 32 im Armaturenbrett 22 und eine in der Mittelkonsole 24 vorgesehen.

Auch befinden sich berührungsempfindliche Oberflächen 32 am Fahrersitz 14 und am Beifahrersitz 16 und dienen insbesondere zur Sitzverstellung. Zur Veranschaulichung sind diese berührungsempfindlichen Oberflächen 32 auf den Oberseiten der Sitze 14, 16 dargestellt. Jedoch können sich diese auch auf den Seiten der Sitze 14, 16 an den bekannten Positionen für Verstellvorrichtungen für die Sitze befinden.

Am Steuerknüppel 28 ist auch wenigstens eine berührungsempfindliche Oberfläche 32 vorgesehen. Beispielsweise ist die berührungsempfindliche Oberfläche 32 am Steuerknüppel 28 in verschiedene Bereiche aufgeteilt, die an den Stellen am Steuerknüppel 28 vorgesehen sind, an denen die Fingerspitzen eines Benutzers anliegen.

Zur Veranschaulichung sind die beschriebenen berührungsempfindlichen Oberflächen 32 jeweils räumlich stark begrenzt dargestellt. Selbstverständlich können die berührungsempfindlichen Oberflächen 32 auch wesentlich größer sein und beispielsweise wenigstens 50 %, insbesondere wenigstens 75 % der Oberfläche des jeweiligen Fahrzeugbauteils 10 einnehmen. Dabei wird nur die dem Innenraum zugewandte Oberfläche des jeweiligen Fahrzeugbauteils 10 berücksichtigt.

Beispielsweise kann die berührungsempfindliche Oberfläche 32 ober- oder unterhalb einer Zieroberfläche des jeweiligen Fahrzeugbauteils 10 vorgesehen sein, sodass große berührungsempfindliche Oberflächen 32 in optisch ansprechender Weise realisiert werden können. Die Bedienfläche 43 kann eine berührungsempfindliche Folie umfassen.

Selbstverständlich kann wenigstens eine der berührungsempfindlichen Oberflächen 32 zusammen mit einem der Ausgabebildschirme 36 als Touch-Display ausgeführt sein.

In Figur 1b) ist beispielhaft eine berührungsempfindliche Oberfläche 32 an einem Fahrzeugbauteil 10 im Schnitt dargestellt.

In dem gezeigten Ausführungsbeispiel ist die berührungsempfindliche Oberfläche 32 nicht direkt am Fahrzeugbauteil 10 befestigt, sondern unterhalb der berührungsempfindlichen Oberfläche 32 ist ein optisches Element 40, in diesem Falle ein weiterer Bildschirm, vorgesehen. Das optische Element 40 kann jedoch auch eine LED-Matrix oder einzelne LEDs sein.

Der Bildschirm und die berührungsempfindliche Oberfläche 32 bilden zusammen ein berührungsempfindliches Touch-Display, wie es beispielsweise von Smartphones oder Tablets bekannt ist. Denkbar ist selbstverständlich auch, dass die Reihenfolge von berührungsempfindlicher Oberfläche 32 und optischem Element 40 vertauscht ist und/oder zusätzlich noch eine Schutzschicht auf der Außenseite vorgesehen ist.

Außerdem ist zwischen der berührungsempfindlichen Oberfläche 32 und dem Fahrzeugbauteil 10 ein mechanisches Rückkopplungselement 41 vorgesehen. In der gezeigten Ausführungsform handelt es sich dabei um einen Vibrationsmotor, der die berührungsempfindliche Oberfläche 32 in Vibration versetzen kann.

Denkbar ist, dass das mechanische Rückkopplungselement 41 ein Druckwiderstand ist, wie er aus Drucktasten (z. B. bei einer Tastatur) bekannt ist. Der Druckwiderstand kann einen bestimmten Druckpunkt durch eine mechanische Gegenkraft erzeugen, um eine haptische Rückkopplung beim Drücken der berührungsempfindlichen Oberfläche 32 zu geben.

Denkbar ist jedoch auch, dass es sich bei dem mechanischen Rückkopplungselement 41 um eine Ultraschallquelle handelt, die Ultraschallwellen in Richtung des Fingers eines Benutzers emittiert, um eine haptische Rückkopplung beim Betätigen der berührungsempfindlichen Oberfläche 32 zu geben.

Die Mensch-Maschinen-Schnittstelle 30 weist mehrere Auswahlflächen 42 und Bedienflächen 43 auf, die durch die berührungsempfindlichen Oberflächen 32 gebildet werden. Hierzu sind einige der berührungsempfindlichen Oberflächen 32 als Auswahlfläche 42 und die übrigen berührungsempfindlichen Oberflächen 32 als Bedienflächen 43 ausgeführt.

Denkbar ist jedoch auch, dass die Zuordnung, ob eine berührungsempfindliche Oberfläche 32 eine Auswahlfläche 42 oder eine Bedienfläche 43 darstellt, dynamisch ist und davon abhängt, welche beiden berührungsempfindlichen Oberflächen 32 gleichzeitig verwendet werden.

Im in Figur 1a) gezeigten Ausführungsbeispiel sind die Auswahlflächen 42 diejenigen berührungsempfindlichen Oberflächen 32, die auf der linken Seite des Fahrersitzes 14 angeordnet sind, und die Bedienflächen 43 sind diejenigen berührungsempfindlichen Oberflächen 32, die auf der rechten Seite des Fahrersitzes 14 angeordnet sind.

Dadurch sind die Auswahlflächen 42 und die Bedienflächen 43 auf verschiedenen Seiten des Fahrersitzes 14 vorgesehen.

Zur Bestimmung, auf welcher Seite eine der berührungsempfindlichen Oberflächen 32 vom Fahrersitz 14 liegt, wird die Lage der entsprechenden berührungsempfindlichen Oberfläche 32 zur Mittelinie des Fahrersitzes 14 in Fahrtrichtung betrachtet. Da diese Mittellinie auch das Lenkrad 12 schneidet, können sowohl wenigstens eine Auswahlfläche 42 als auch wenigstens eine Bedienfläche 43 auf dem Lenkrad 12 vorgesehen sein. Betrachtet wird das Lenkrad 12 dabei im unverdrehten Zustand.

Somit sind die Auswahlflächen 42 für den Fahrer (bei Rechtsverkehr) einfach mit der linken Hand zu erreichen und die Bedienflächen 43 sind für den Fahrer einfach mit der rechten Hand zu erreichen.

Selbstverständlich können die berührungsempfindlichen Oberflächen 32 auf der rechten Seite des Beifahrersitzes 16 auch Auswahlflächen 42 darstellen, damit auch der Beifahrer Auswahlflächen 42 erreichen kann, jedoch mit seiner rechten Hand.

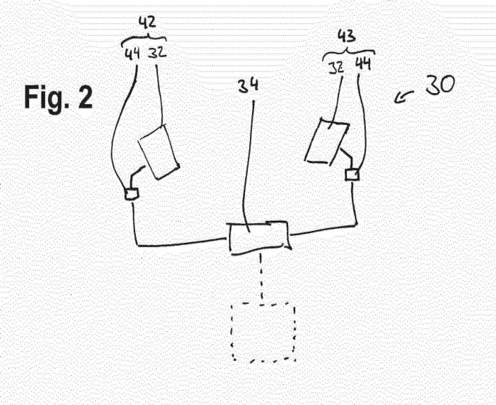

In Figur 2 ist schematisch und stark vereinfacht ein Aufbau der Mensch-Maschinen-Schnittstelle 30 aus einer Auswahlfläche 42 und einer Bedienfläche 43 gezeigt, die mit der Steuereinheit 34 mittels Kabeln verbunden sind.

Sowohl die Auswahlfläche 42 als auch die Bedienfläche 43 weisen jeweils einen eigenen Flächencontroller 44 auf, der die jeweilige berührungsempfindliche Oberfläche 32 steuert. Der Flächencontroller 44 erkennt Berührungen auf der jeweiligen berührungsempfindlichen Oberfläche 32 und er kann die Anzahl und den Ort von der einen Berührung oder von mehreren Berührungen auf der entsprechenden Auswahlfläche 42 oder Bedienfläche 43 erkennen.

Die Flächencontroller 44 sind über Kabel beide mit der Steuereinheit 34 verbunden, um die Informationen über die Anzahl und Orte der Berührungen an die Steuereinheit 34 zu übermitteln.

Die Steuereinheit 34 wertet die von den Flächencontrollern 44 bereitgestellten Informationen aus und führt Funktionen aus. Hierzu kann die Steuereinheit 34 beispielsweise ein Fahrzeugsteuergerät (gestrichelt dargestellt) ansteuern.

Selbstverständlich kann die Steuereinheit 34 selbst in das Fahrzeugsteuergerät integriert sein.

Denkbar ist auch, dass die Flächencontroller 44 in die Steuereinheit 34 integriert sind.

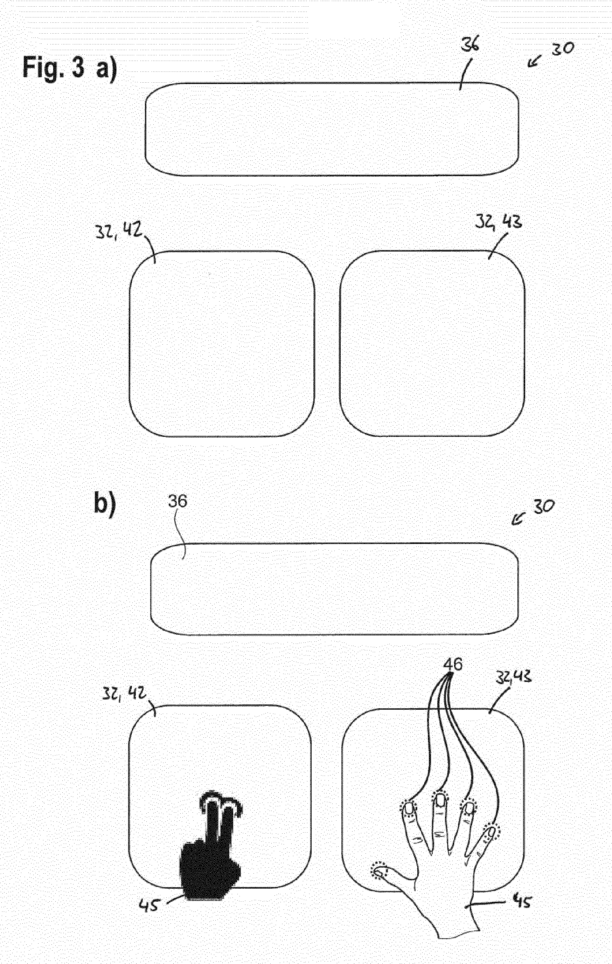

In den Figuren 3a) bis 3d) sowie 4a) und 4b) sind zur Erläuterung des Verfahrens beispielhaft eine der Auswahlflächen 42 (unten links), eine der Bedienflächen 43 (unten rechts) sowie ein Teil der Anzeige eines Ausgabebildschirms 36 (oben) schematisch dargestellt.

Die gezeigte Anordnung der Auswahlfläche 42, der Bedienfläche 43 und des Ausgabebildschirms 36 ist lediglich zur kompakten Darstellung gewählt. Wie in Figur 1a) zu erkennen ist, ist der Abstand zwischen diesen Bauteilen größer.

Fasst der Benutzer der Mensch-Maschinen-Schnittstelle 30 den Entschluss, eine Funktion ausführen, berührt er in der Regel noch keine der berührungsempfindlichen Oberflächen 32.

Zu Beginn des Verfahren werden also weder die Auswahlfläche 42 noch die Bedienfläche 43 berührt, und auch im Ausgabebildschirm 36 werden keine Informationen ausgegeben (Fig. 3a).

Legt nun ein Benutzer seine Hand 45, wie in Figur 3b) dargestellt, auf die Bedienfläche 43, berührt er die berührungsempfindliche Oberfläche 32 der Bedienfläche 43 mit seinen fünf Fingern gleichzeitig, wodurch fünf verschiedene Berührungspunkte 46 erzeugt werden.

Der Benutzer kann seine Hand an jede beliebige Stelle auf der Bedienfläche 43 legen bzw. seine Finger können an jeder beliebigen Stelle die Bedienfläche 43 berühren, ohne dass das Verfahren dadurch gestört würde.

Die Berührung der Finger an den Berührungspunkten 46 wird vom entsprechenden Flächencontroller 44 erkannt und die Information darüber an die Steuereinheit 34 übermittelt.

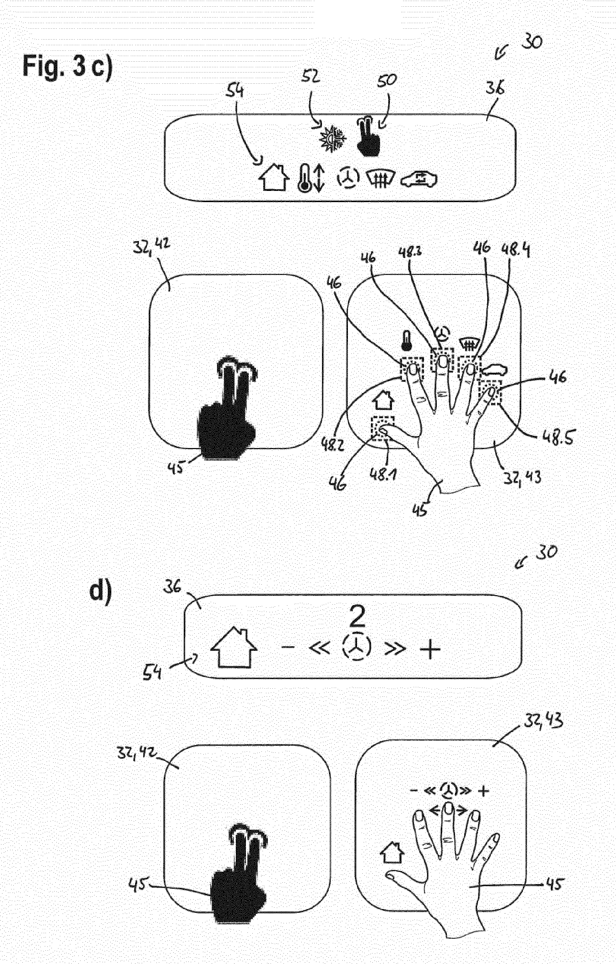

Diesen Berührungspunkten 46 wird daraufhin jeweils eine Schaltfläche 48.1, 48.2, 48.3, 48.4, 48.5 zugeordnet (im Folgenden unter dem Bezugszeichen 48 zusammengefasst). Dazu wird die Position (beispielsweise der Mittelpunkt) einer der Schaltflächen 48 auf einen der Berührungspunkte 46 gesetzt (vgl. Fig. 3c).

Die Schaltflächen 48 sind somit einzelnen Berührungspunkten 46 zugeordnet und umfassen den jeweiligen Berührungspunkt 46. Kurz gesagt, befinden sich einander zugeordnete Schaltflächen 48 und Berührungspunkte 46 an der gleichen Position auf der Bedienfläche 43.

Die Schaltflächen 48 sind dabei größer als die Berührungspunkte 46 ausgeführt, sodass sie die Berührungspunkte 46 vollständig umschließen. Außerdem können die Schaltflächen 48 eine runde, insbesondere kreisrunde, oder eine rechteckige Kontur haben.

Außerdem kann die Steuereinheit 34 beim Auflegen der Finger auf der Bedienfläche 43 erkennen, welcher Berührungspunkt 46 welchem Finger einer Hand entsprechen muss, und ordnet den Berührungspunkten 46 und den zugeordneten Schaltflächen 48 dementsprechend den jeweiligen Finger zu.

Die Erkennung der Finger erfolgt beispielsweise durch eine Analyse der Lage der Berührungspunkte 46 zueinander, da diese durch die menschliche Anatomie weitgehend vorgegeben ist.

Dabei berücksichtigt die Steuereinheit 34 nur solche Berührungen bzw. Berührungspunkte 46, die durch die Berührung mit einem Finger hervorgerufen werden.

Auch ist es denkbar, dass die Steuereinheit 34 erkennt, ob die Bedienfläche 43 mit einer linken oder einer rechten Hand bedient wird.

Den Schaltflächen 48 wird zudem von der Steuereinheit 34 eine Funktion zugeordnet, durch die das entsprechende Fahrzeugbauteil 10 oder eine andere Komponente des Fahrzeugs betätigt wird.

Die Komponenten des Fahrzeugs sind beispielsweise das Navigationssystem, das Entertainmentsystem, die Klimaanlage, das Telefonsystem und Fahrzeugbauteile, wie eine Luftfederung, Sitze oder dergleichen.

Die Zuordnung bzw. die Auswahl der Funktion durch die Steuereinheit 34 erfolgt in Abhängigkeit der Berührungen an der Auswahlfläche 42.

Im gezeigten Ausführungsbeispiel berührt der Benutzer die Auswahlfläche 42 mit zwei Fingern, wodurch zwei verschiedene Berührungspunkte 46 erzeugt werden.

Auch auf der Auswahlfläche 42 kann der Benutzer seine Finger an einer beliebigen Stelle platzieren.

Die Berührung der Finger an der Auswahlfläche 42 bzw. die Berührungspunkte 46 werden vom Flächencontroller 44 erkannt und der Steuereinheit 34 übermittelt. Die Steuereinheit 34 ermittelt dann die Anzahl an Berührungspunkten 46 bzw. Finger.

Dabei berücksichtigt die Steuereinheit 34 nur solche Berührungen bzw. Berührungspunkte 46, die durch die Berührung mit einem Finger hervorgerufen werden. Die Erkennung, ob ein Berührungspunkt 46 von einem Finger erzeugt wurde oder nicht, kann beispielsweise durch eine Analyse der Lage der Berührungspunkte 46 zueinander erfolgen, da die Lage der Berührungspunkte 46 zueinander durch die menschliche Anatomie vorgegeben ist.

Auch die Größe des Berührungspunktes 46 kann ausschlaggebend sein. Auf diese Weise lässt sich beispielsweise die Berührung der Auswahlfläche 42 durch den Handballen der Hand 45 erkennen und ignorieren.

Hat die Steuereinheit 34 die Anzahl der Berührungspunkte 46 - hier also zwei Berührungspunkte 46 - erkannt, wählt sie einen der Anzahl der Finger zugeordneten Funktionensatz aus, der beispielsweise in einem Speicher der Steuereinheit 34 hinterlegt ist.

Ein Funktionensatz umfasst mehrere Funktionen, denen jeweils eine Schaltfläche 48 auf der Bedienfläche 43 zugeordnet ist, mittels der die entsprechende Funktion ausgeführt werden kann.

Die Funktionen innerhalb eines Funktionensatzes sind vorzugsweise thematisch ähnlich oder betreffen die gleiche Komponente des Fahrzeugs.

Zum Beispiel stellen die Funktionen "Zieltemperatur verändern", "Lüftergeschwindigkeit verändern", "Fensterheizung" und "Umluftbetrieb" Funktionen des Funktionensatzes "Klimaanlage" dar, der zur Steuerung der Klimaanlage verwendet wird.

Andere Funktionssätze sind beispielsweise "Navigation", "Entertainment", "Telefonie" und "Autoeinstellungen".

Im gezeigten Ausführungsbeispiel ist eine Berührung der Auswahlfläche 42 an zwei Berührungspunkten 46 dem Funktionensatz "Klimaanlage" zugeordnet, der von der Steuereinheit 34 entsprechend ausgewählt wird.

Die Steuereinheit 34 stellt dann auf dem Ausgabebildschirm 36 sowohl die Anzahl an erkannten Berührungspunkten 46, hierdurch ein entsprechendes Hand-Icon 50 und den ausgewählten Funktionensatz, hier über ein entsprechendes Symbol 52, dar.

Außerdem werden von der Steuereinheit 34 die Funktionen durch Funktionssymbole 54 dargestellt, die im gewählten Funktionensatz "Klimaanlage" vorhanden sind.

Jede dieser Funktionen ist einem Finger bzw. einer Schaltfläche 48 auf der Bedienfläche 43 zugeordnet.

Im dargestellten Ausführungsbeispiel wird in Figur 3c) der Schaltfläche 48.1 der Daumen zugeordnet und als Funktion die Rückkehr zum Hauptmenü zugewiesen. Diese Funktion wird im Ausgabebildschirm 36 durch ein kleines Häuschen symbolisiert.

In gleicher Weise wird der Schaltfläche 48.2 der Zeigefinger und die Funktion "Zieltemperatur verändern" zugeordnet; der Schaltfläche 48.3 wird der Mittelfinger und die Funktion "Lüftergeschwindigkeit verändern" zugewiesen; der Schaltfläche 48.4 wird der Ringfinger und die Funktion "Fensterheizung" zugeordnet und der Schaltfläche 48.5 wird der kleine Finger und die Funktion "Umluftbetrieb" zugewiesen.

Alle diese Funktionen sind im Ausgabebildschirm 36 durch die Funktionssymbole 54 dargestellt. Dabei entspricht die Reihenfolge der dargestellten Funktionen, also der Funktionssymbole 54, der Reihenfolge der Finger auf der Bedienfläche 43.

Gleichzeitig kann auch über das optische Element 40 oberhalb jedes Fingers bzw. oberhalb der Schaltfläche 48 das Funktionssymbol 54 der entsprechenden Funktion dargestellt werden, um auch an der Bedienfläche 43 selbst auf die Funktionen der Schaltflächen 48 hinzuweisen.

Außerdem können die Schaltflächen 48 auf dem optischen Element 40 selbst dargestellt werden, beispielsweise als Rahmen oder hervorgehobene Fläche.

Der Benutzer kann nun die gewünschte Funktion durch Betätigen der entsprechenden Schaltfläche 48 auswählen. Dies ist in den Figuren 3c) und 3d) gezeigt, wobei aus Gründen der Übersichtlichkeit in Figur 3d) auf die Darstellung der Berührungspunkte 46 und Schaltflächen 48 verzichtet wurde.

Zum Beispiel möchte der Benutzer die Lüftung aufdrehen. Hierzu betätigt er mithilfe seines Mittelfingers die Schaltfläche 48.3, um die Funktion "Lüftergeschwindigkeit verändern" auszuwählen, damit er die Stärke der Lüftung einstellen kann.

Der Benutzer betätigt also die Schaltfläche 48.3. Dies kann beispielsweise dadurch geschehen, dass der Benutzer seinen Mittelfinger nur kurz anhebt und wieder auf die Bedienfläche 43 auflegt, sodass die Schaltfläche 48 erneut berührt wird.

Die Position dieser erneuten Berührung wird dann vom Flächencontroller 44 bzw. von der Steuereinheit 34 ausgewertet und der Schaltfläche 48.3 zugeordnet, sodass die Steuereinheit 34 die Schaltfläche 48.3 als betätigt ansieht und die entsprechende Funktion "Lüftergeschwindigkeit verändern" ausführt.

In diesem Fall wird daraufhin zum Menü zur Steuerung des Lüfterrads gewechselt.

Dies kann durch ein Aufleuchten des Symbols der Klimasteuerung im Ausgabebildschirm 36 bestätigt werden, wodurch der Benutzer eine visuelle Rückkopplung erhält.

Beim Betätigen der Schaltfläche wird das mechanische Rückkopplungselement 41, hier der Vibrationsmotor, kurz aktiviert, sodass der Benutzer ein haptisches Feedback erhält, dass er soeben die Schaltfläche 48.3 betätigt hat.

Denkbar ist jedoch auch, dass die Betätigung durch eine Druckerhöhung erfolgen muss, d. h. dass der Benutzer mit seinem Mittelfinger den Druck auf die berührungsempfindliche Oberfläche 32 im Bereich der Schaltfläche 48.3 erhöht. Diese Druckerhöhung kann erkannt werden, beispielsweise durch die Verbreiterung des Berührungspunktes 46 im Bereich des Mittelfingers. Jedoch sind auch andere Möglichkeiten zur Erkennung der Druckerhöhung möglich.

Der Benutzer gelangt somit zum Menü gemäß Figur 3d), mit dem er die Geschwindigkeit des Lüfterrads einstellen kann. Hierzu ist die Schaltfläche 48.3 beispielsweise wie ein Schieberegler ausgeführt, den der Benutzer durch Wischen oder Verschieben ("Drag") seines Mittelfingers nach links oder rechts, d. h. durch Verschieben des Berührungspunktes 46 betätigen kann.

Alternativ oder zusätzlich können den Schaltflächen 48.2 und 48.4 des Zeige- bzw. Ringfingers Funktionen zugeordnet sein, die die Geschwindigkeit des Lüfterrads inkrementell verringern bzw. vergrößern. Dies wird mit einem Minus- bzw. Plus-Symbol sowohl im Ausgabebildschirm 36 als auch auf dem optischen Element 40 dargestellt.

Zusätzlich kann am Ausgabebildschirm 36 die aktuelle Geschwindigkeitsstufe angegeben sein. Hier ist es Geschwindigkeitsstufe "2".

Der Benutzer hat somit sein Ziel erreicht, nämlich die Stärke der Lüftung der Klimaanlage zu verändern. Hierzu musste er nicht nach einem Knopf tasten oder eine bestimmte Schaltfläche mit seinem Finger treffen, da die Schaltflächen 48 durch die Steuereinheit 34 jeweils auf die Berührungspunkte 46 der Finger seiner Hand gesetzt wurden.

Eine optische Kontrolle oder Rückmeldung über sein Vorgehen hat der Benutzer vollständig durch den Ausgabebildschirm 36 erhalten, der auf dem Armaturenbrett 22 oder im Head-up-Display 38 ist, sodass er seinen Blick nur für kurze Zeit von der Straße abwenden musste. Somit konnte er die gewünschte Aufgabe ohne großen Aufmerksamkeitsverlust ausführen.

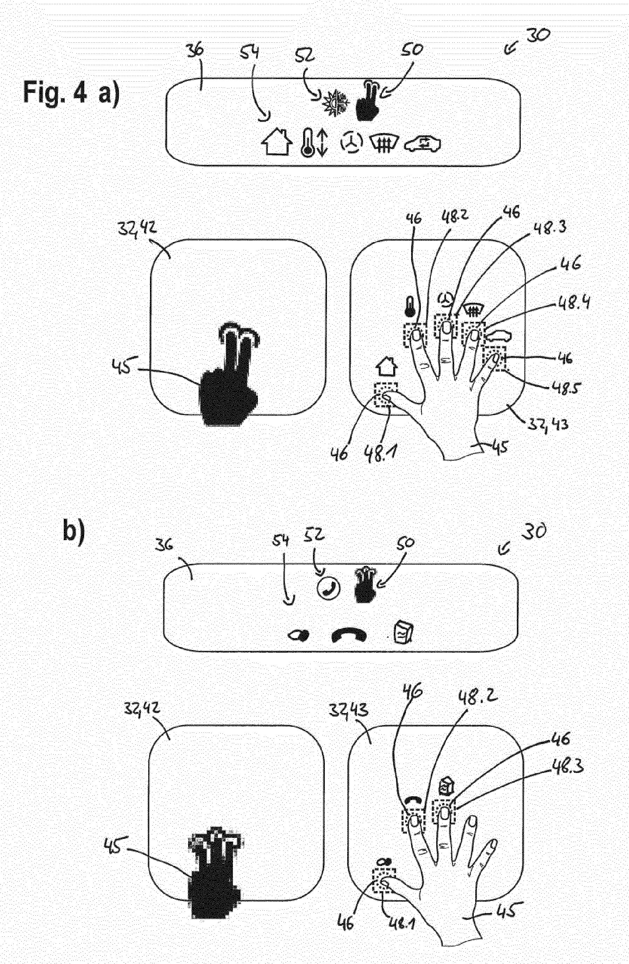

Außerdem kann der Benutzer schnell zwischen verschiedenen Funktionssätze wechseln, wie in Figur 4 zu sehen ist.

Die Figur 4a) entspricht der Figur 3c), der Benutzer berührt also mit zwei Fingern der linken Hand die Auswahlfläche 42 und mit allen fünf Fingern der rechten Hand die Bedienfläche 43. Daher ist der Funktionensatz "Klimaanlage" aktiviert.

Der Benutzer möchte nun jedoch sein zur Zeit laufendes Telefonat beenden und nicht weiter die Klimaanlage steuern.

Hierzu nimmt der Benutzer einen dritten Finger seiner linken Hand und berührt damit zusätzlich die Auswahlfläche 42, sodass auf der Auswahlfläche 42 nun drei Berührungspunkte 46 vorhanden sind (vgl. Fig. 4b).

Da die Steuereinheit 34 bzw. der Flächencontroller 44 wiederholt, beispielsweise kontinuierlich oder in regelmäßigen Abständen, die Anzahl an Berührungspunkten 46 bzw. Fingern auf der Auswahlfläche 42 bestimmt, erfasst sie auch, dass sich die Anzahl geändert hat.

Dementsprechend wählt die Steuereinheit 34 nun den Funktionensatz aus, der drei Fingern auf der Auswahlfläche 42 zugeordnet ist und ordnet die Funktionen den entsprechenden Schaltflächen 48 zu und aktualisiert die Ausgabe des Ausgabebildschirms 36.

Der Funktionensatz und damit die Funktionen der Schaltflächen 48 werden somit anhand der Anzahl der Berührungspunkten an der Auswahlfläche 42 ausgewählt, die während der Dauer der Berührung an der Bedienfläche 43 ermittelt wird.

Im gezeigten Ausführungsbeispiel ist der Funktionensatz "Telefonie" drei Fingern auf der Auswahlfläche 42 zugeordnet. Der Funktionensatz "Telefonie" enthält zum Beispiel drei Funktionen, nämlich "Wahlwiederholung", "Auflegen" und "Telefonbuch" .

Diese Funktionen werden den benachbarten Schaltflächen 48.1, 48.2 und 48.3 bzw. benachbarten Berührungspunkten 46 zugeordnet. Die Berührungspunkte 46 sind durch Berührung mit dem Daumen, Zeigerfinger und Mittelfinger erzeugt worden.

Der Benutzer kann nun das Telefonat mit seinem Zeigefinger der rechten Hand durch Betätigen der Schaltfläche 48.2 beenden.

In einer anderen Ausführungsform enthält jeder Funktionensatz nur drei Funktionen, die den Schaltflächen 48.1, 48.2 und 48.3 des Daumens, Zeigefingers und Mittelfingers zugeordnet sind. Dadurch kann die Geschwindigkeit der Mensch-Maschinen-Schnittstelle 30 verbessert und die Bedienbarkeit erhöht werden, da Benutzer Schwierigkeiten haben könnten ihren Ringfinger oder kleinen Finger einzeln zu bewegen. Die übrigen Schaltflächen 48.4 und 48.5 werden in diesem Fall nicht erzeugt.

Denkbar ist auch, dass die Anzahl an Fingern bzw. Berührungspunkten 46 auf der Auswahlfläche 42 nur zu einem einzigen Zeitpunkt ermittelt wird. Die Funktionen werden dann anhand dieser Anzahl an Berührungspunkten 46 bzw. Fingern von der Steuereinheit 34 ausgewählt. Der Zeitpunkt kann zum Beispiel der Zeitpunkt sein, an dem die Bedienfläche 43 zum ersten Mal nach einer Periode ohne Berührung wieder berührt wird, oder er kann ein Zeitpunkt sein, der ein vorbestimmtes Zeitintervall vor einer erneuten Berührung der Bedienfläche 43 liegt. Dadurch ist es nicht notwendig, dass der Benutzer stets beide Hände auf der Auswahlfläche 42 bzw. der Bedienfläche 43 platziert haben muss.

Auch können der Funktionensatz bzw. die Funktionen zusätzlich in Abhängigkeit anderer Parameter von der Steuereinheit 34 ausgewählt werden.

Von der Steuereinheit 34 kann zum Beispiel anhand der Positionen der Berührungspunkte 46 untereinander auch darauf geschlossen werden, ob auf der Auswahlfläche 42 und/oder der Bedienfläche 43 eine rechte oder eine linke Hand aufliegt.

Dies ist zum Beispiel nötig, um den Fingern immer diejenige Funktion zuordnen zu können, die vom Benutzer mit dem jeweiligen Finger assoziiert wird. Beispielsweise um sicherzustellen, dass der Benutzer durch die Betätigung der Schaltfläche unter seinem Daumen immer zurück ins Hauptmenü gelangt.

Die Information, ob eine linke oder eine rechte Hand auf der berührungsempfindlichen Oberfläche 32 aufliegt, kann auch dafür verwendet werden, die Funktionen bzw. den Funktionensatz auszuwählen, die den Schaltflächen 48 zugeordnet werden.

Wenn zum Beispiel in einem Fahrzeug, das für Rechtsverkehr gebaut wurde, die berührungsempfindliche Oberfläche 32 auf der Mittelkonsole 24 angebracht ist, bedient der Fahrer die berührungsempfindliche Oberfläche 32 mit der rechten Hand, der Beifahrer jedoch nur mit seiner linken Hand.

Somit kann von der Steuereinheit 34 anhand der verwendeten Hand 45 erkannt werden, ob der Fahrer oder der Beifahrer die berührungsempfindliche Oberfläche 32 bedient.

Dadurch können den Schaltflächen 48 dann unterschiedliche Funktionen für Fahrer und Beifahrer zugeordnet werden. Beispielsweise kann der Beifahrer nur die Klimazone für den Beifahrersitz verändern.

Auch ist es denkbar, dass der Funktionensatz bzw. die Funktionen in Abhängigkeit davon ausgewählt werden, welche oder welcher Finger die Auswahlfläche 42 berühren bzw. berührt.

## Patentansprüche

1. Verfahren zum Betreiben einer Mensch-Maschinen-Schnittstelle (30) für ein Fahrzeug mit einer Steuereinheit (34) und wenigstens einer Auswahlfläche (42), die als berührungsempfindliche Oberfläche (32) ausgeführt ist, und wenigstens einer Bedienfläche (43), die als berührungsempfindliche Oberfläche (32) ausgeführt ist, wobei die wenigstens eine Auswahlfläche (42) und die wenigstens eine Bedienfläche (43) voneinander getrennt sind, mit den folgenden Schritten:
a) eine Berührung an wenigstens einem beliebigen Berührungspunkt (46) der wenigstens einen Bedienfläche (43) wird erkannt,
b) die Anzahl an Fingern, die die wenigstens eine Auswahlfläche (42) berühren, wird bestimmt, und
c) dem wenigstens einen beliebigen Berührungspunkt (46) an der wenigstens einen Bedienfläche (43) wird anschließend eine Schaltfläche (48) zugeordnet, mittels der eine Eingabe möglich ist,
wobei der Schaltfläche (48) eine Funktion zugeordnet wird, die in Abhängigkeit der Anzahl der Finger, die die wenigstens eine Auswahlfläche (42) berühren, ausgewählt wird.

2. Verfahren nach Anspruch 1, **dadurch gekennzeichnet, dass** zur Auswahl der Funktion der Schaltfläche (48) die Anzahl an Fingern an der Auswahlfläche (42) herangezogen wird, die zum Zeitpunkt der Berührung der Bedienfläche (43), ein vorbestimmtes Zeitintervall zuvor oder während der Dauer der Berührung ermittelt wurde.

3. Verfahren nach Anspruch 1 oder 2, **dadurch gekennzeichnet, dass** die Anzahl an Fingern an der Auswahlfläche (42) wiederholt erneut ermittelt wird und die Funktion der Schaltfläche (48) gegebenenfalls angepasst wird.

4. Verfahren nach einem der vorhergehenden Ansprüche, **dadurch gekennzeichnet, dass** mehrere gleichzeitige Berührungen, insbesondere von mehreren Fingern an mehreren Berührungspunkten (46) der Bedienfläche (43) erkannt werden, wobei mindestens den Berührungspunkten (46) an der Bedienfläche (43) jeweils eine Schaltfläche (48) mit jeweils einer Funktion zugeordnet wird.

5. Verfahren nach Anspruch 4, **dadurch gekennzeichnet, dass** die Funktionen, die den verschiedenen Berührungspunkten (46) bei gleichzeitiger Berührung zugeordnet werden, einen Funktionensatz darstellen, wobei der verwendete Funktionensatz in Abhängigkeit der Anzahl der Finger auf der wenigstens einen Auswahlfläche (42) ausgewählt wurde.

6. Verfahren nach Anspruch 5, **dadurch gekennzeichnet, dass** jeder Funktionensatz drei Funktionen umfasst, die den Schaltflächen (48.1, 48.2, 48.3) von drei benachbarten Berührungspunkten (46) zugeordnet werden, insbesondere den Schaltflächen, deren Berührungspunkte (46) durch den Daumen, den Zeigefinger und den Mittelfinger der Hand des Benutzers erzeugt wurden.

7. Verfahren nach einem der vorhergehenden Ansprüche, **dadurch gekennzeichnet, dass** erkannt wird, mit welchem Finger die Auswahlfläche (42) und/oder die Bedienfläche (43) bedient wird, wobei die Funktion und/oder der Funktionensatz in Abhängigkeit des verwendeten Fingers ausgewählt wird.

8. Verfahren nach einem der vorhergehenden Ansprüche, **dadurch gekennzeichnet, dass** die Hand erkannt wird, mit der die Auswahlfläche (42) und/oder die Bedienfläche (43) bedient wird, wobei die Funktion und/oder der Funktionensatz in Abhängigkeit der verwendeten Hand ausgewählt wird.

9. Mensch-Maschinen-Schnittstelle für ein Fahrzeug, die insbesondere dazu eingerichtet ist, das Verfahren gemäß einem der vorhergehenden Ansprüche durchzuführen, mit einer Steuereinheit (34) und wenigstens einer Auswahlfläche (42), die als berührungsempfindliche Oberfläche (32) ausgeführt ist, und wenigstens einer Bedienfläche (43), die als berührungsempfindliche Oberfläche (32) ausgeführt ist, wobei die wenigstens eine Auswahlfläche (42) und die wenigstens eine Bedienfläche (43) voneinander getrennt sind und mit der Steuereinheit (34) zur Datenübertragung verbunden sind,
wobei im Betrieb der Mensch-Maschinen-Schnittstelle (30) an der Bedienfläche (43) wenigstens eine Schaltfläche (48) vorgesehen ist, der eine Funktion zugeordnet ist, die in Abhängigkeit der Anzahl der Finger auf der wenigstens einen Auswahlfläche (42) ausgewählt ist.

10. Mensch-Maschinen-Schnittstelle nach Anspruch 9, **dadurch gekennzeichnet, dass** die Auswahlfläche (42) und/oder die Bedienfläche (43) einen Flächencontroller (44) aufweist, der die Anzahl und den Ort von wenigstens einer Berührung auf der ihm zugeordneten Auswahlfläche (42) oder Bedienfläche (43) erkennt, wobei der Flächencontroller (44) mit der Steuereinheit (34) zur Übertragung der Anzahl und des Orts der wenigstens einen Berührung auf der ihm zugeordneten berührungsempfindlichen Oberfläche (32) verbunden ist.

11. Mensch-Maschinen-Schnittstelle nach Anspruch 9 oder 10, **dadurch gekennzeichnet, dass** die Position der Schaltfläche (48) von der Steuereinheit (34) derart bestimmt ist, dass die Position der Schaltfläche (48) bei einer Berührung der Bedienfläche (43) an einem beliebigen Berührungspunkt (46) von der Steuereinheit (34) auf den Berührungspunkt (46) gesetzt wird, der berührt wurde.

12. Mensch-Maschinen-Schnittstelle nach einem der Ansprüche 9 bis 11, **dadurch gekennzeichnet, dass** die wenigstens eine Schaltfläche (48) durch erneute Berührung, Druckerhöhung und/oder Verschieben des Berührungspunktes (46) bedienbar ist.

13. Mensch-Maschinen-Schnittstelle nach einem der Ansprüche 9 bis 12, **dadurch gekennzeichnet, dass** die Auswahlfläche (42) und die Bedienfläche (43) an unterschiedlichen Seiten eines Sitzes (14, 16), insbesondere des Fahrersitzes (14) vorgesehen sind.

14. Mensch-Maschinen-Schnittstelle nach einem der Ansprüche 9 bis 13, **dadurch gekennzeichnet, dass** die Mensch-Maschinen-Schnittstelle (30) wenigstens ein Fahrzeugbauteil (10, 12, 14, 16, 18, 20, 22, 24, 26, 28) aufweist, wobei die Auswahlfläche (42) und die Bedienfläche (43) an dem wenigstens einen Fahrzeugbauteil (10, 12, 14, 16, 18, 20, 22, 24, 26, 28) angeordnet sind, insbesondere wobei mehrere Fahrzeugbauteile (10, 12, 14, 16, 18, 20, 22, 24, 26, 28) vorgesehen sind, wobei die Auswahlfläche (42) und die Bedienfläche (43) an unterschiedlichen Fahrzeugbauteilen (10, 12, 14, 16, 18, 20, 22, 24, 26, 28) angeordnet sind, insbesondere wobei das Fahrzeugbauteil (10) ein Lenkrad (12), ein Sitz (14, 16), ein Steuerknüppel (28), eine Türblende (18), eine Armlehne (20), ein Teil einer Mittelkonsole (24), ein Teil eines Armaturenbretts (22) und/oder ein Teil einer Überkopfverkleidung (26) ist.

15. Mensch-Maschinen-Schnittstelle nach einem der Ansprüche 9 bis 14, **dadurch gekennzeichnet, dass** die Mensch-Maschinen-Schnittstelle (30) einen Ausgabebildschirm (36) aufweist, der räumlich getrennt von der Auswahlfläche (42), der Bedienfläche (43) und/oder dem Fahrzeugbauteil (10, 12, 14, 16, 18, 20, 22, 24, 26, 28) angeordnet ist, wobei die Funktion der wenigstens einen Schaltfläche (48) auf dem Ausgabebildschirm (36) dargestellt ist.

## Claims

1. A method for operating a human machine interface (30) for a vehicle comprising a control unit (34) and at least one selection area (42) designed as a touch-sensitive surface (32) and at least one operating area (43) designed as a touch-sensitive surface (32), wherein said at least one selection area (42) and said at least one operating area (43) are separated from each other, comprising the following steps:
a) a touch on at least one arbitrary contact point (46) of said at least one operating area (43) is recognized,
b) the number of fingers touching said at least one selection area (42) is determined, and
c) subsequently, a button (48), by means of which an input is possible, is assigned to said at least one arbitrary contact point (46) on said at least one operating area (43),
wherein a function is assigned to the button (48), said function being selected depending on the number of fingers that touch said at least one selection area (42).

2. The method according to claim 1, **characterized in that** the number of fingers on the selection area (42) is used for selecting the function of the button (48), said number of fingers being determined the moment the operating area (43) is touched, a predetermined period before or during the period of the touch.

3. The method according to claim 1 or 2, **characterized in that** the number of fingers on the selection area (42) is determined repeatedly anew and the function of the button (48) is adapted if necessary.

4. The method according to any of the preceding claims, **characterized in that** several simultaneous touches, in particular by several fingers on several contact points (46) of the operating area (43), are recognized, wherein at least the contact points (46) on the operating area (43) are each assigned a button (48) each comprising one function.

5. The method according to claim 4, **characterized in that** the functions that are assigned to the different contact points (46) when touched simultaneously constitute a set of functions, wherein the set of functions used was selected depending on the number of fingers on said at least one selection area (42).

6. The method according to claim 5, **characterized in that** each set of functions comprises three functions that are assigned to the buttons (48.1, 48.2, 48.3) of three adjacent contact points (46), in particular to the buttons whose contact points (46) were generated by the thumb, the index finger and the middle finger of the user's hand.

7. The method according to any of the preceding claims, **characterized in that** the finger operating the selection area (42) and/or the operating area (43) is recognized, wherein the function and/or the set of functions is/are selected depending on the finger used.

8. The method according to any of the preceding claims, **characterized in that** the hand operating the selection area (42) and/or the operating area (43) is recognized, wherein the function and/or the set of functions is/are selected depending on the hand used.

9. A human machine interface for a vehicle, which is in particular configured for carrying out the method according to any of the preceding claims, comprising a control unit (34) and at least one selection area (42) designed as a touch-sensitive surface (32) and at least one operating area (43) designed as a touch-sensitive surface (32), wherein said at least one selection area (42) and said at least one operating area (43) are separated from each other and connected to the control unit (34) for the purpose of transmitting data,
wherein at least one button (48), to which a function is assigned, is provided on the operating surface (43) during operation of the human machine interface (30), said function being selected depending on the number of fingers on said at least one selection area (42).

10. The human machine interface according to claim 9, **characterized in that** the selection area (42) and/or the operating area (43) include(s) an area controller (44) that recognizes the number and position of at least one touch on the selection area (42) or operating area (43) assigned to it, wherein the area controller (44) is connected to the control unit (34) in order to transmit the number and the position of the at least one touch on the touch-sensitive surface (32) assigned to it.

11. The human machine interface according to claim 9 or 10, **characterized in that** the position of the button (48) is determined by the control unit (34) in such a way that on touching the operating surface (43) on any contact point (46), the position of the button (48) is set by the control unit (34) to the contact point (46) that was touched.

12. The human machine interface according to any of claims 9 to 11, **characterized in that** said at least one button (48) is operable via renewed touch, increasing the pressure and/or shifting the contact point (46).

13. The human machine interface according to any of claims 9 to 12, **characterized in that** the selection area (42) and the operating area (43) are provided on different sides of a seat (14, 16), in particular the driver's seat (14).

14. The human machine interface according to any of claims 9 to 13, **characterized in that** the human machine interface (30) comprises at least one vehicle component (10, 12, 14, 16, 18, 20, 22, 24, 26, 28), wherein the selection area (42) and the operating area (43) are located on said at least one vehicle component (10, 12, 14, 16, 18, 20, 22, 24, 26, 28), in particular wherein several vehicle components (10, 12, 14, 16, 18, 20, 22, 24, 26, 28) are provided, wherein the selection area (42) and the operating area (43) are located on different vehicle components (10, 12, 14, 16, 18, 20, 22, 24, 26, 28), in particular wherein the vehicle component (10) is a steering wheel (12), a seat (14, 16), a control stick (26), a door trim (18), an armrest (20), a part of a center console (24), a part of a dashboard (22) and/or a part of an overhead trim (26).

15. The human machine interface according to any of claims 9 to 14, **characterized in that** the human machine interface (30) comprises an output screen (36) that is located spatially separated from the selection area (42), the operating area (43) and/or the vehicle component (10, 12, 14, 16, 18, 20, 22, 24, 26, 28), wherein the function of said at least one button (48) is displayed on the output screen (36).

## Revendications

1. Procédé de mise en œuvre d'une interface homme-machine (30) pour un véhicule comprenant une unité de contrôle (34) et au moins une surface de sélection (42) qui est réalisée sous forme de surface tactile (32), et au moins une surface de commande (43) qui est réalisée sous forme de surface tactile (32), ladite au moins une surface de sélection (42) et ladite au moins une surface de commande (43) étant séparées l'une de l'autre, comprenant les étapes suivantes :
a) un contact en au moins un point de contact arbitraire (46) de ladite au moins une surface de commande (43) est détecté,
b) le nombre de doigts touchant ladite au moins une surface de sélection (42) est déterminé ; et
c) un bouton (48) au moyen duquel une entrée est possible est ensuite attribué audit au moins un point de contact arbitraire (46) sur ladite au moins une surface de commande (43),
une fonction qui est sélectionnée en fonction du nombre de doigts touchant ladite au moins une surface de sélection (42) étant attribuée au bouton (48).

2. Procédé selon la revendication 1, **caractérisé en ce que** pour sélectionner la fonction du bouton (48), le nombre de doigts sur la surface de sélection (42) déterminé au moment du contact de la surface de commande (43), un intervalle de temps prédéterminé avant ou pendant la durée du contact, est pris en compte.

3. Procédé selon la revendication 1 ou 2, **caractérisé en ce que** le nombre de doigts sur la surface de sélection (42) est de nouveau déterminé de manière répétée et la fonction du bouton (48) est adaptée le cas échéant.

4. Procédé selon l'une des revendications précédentes, **caractérisé en ce que** plusieurs contacts simultanés, en particulier de plusieurs doigts en plusieurs points de contact (46) de la surface de commande (43) sont détectés, un bouton (48) présentant une fonction respective étant respectivement attribué au moins aux points de contact (46) sur la surface de commande (43).

5. Procédé selon la revendication 4, **caractérisé en ce que** les fonctions attribuées aux différents points de contact (46) lors d'un contact simultané représentent un ensemble de fonctions, l'ensemble de fonctions utilisé étant sélectionné en fonction du nombre de doigts sur ladite au moins une surface de sélection (42).

6. Procédé selon la revendication 5, **caractérisé en ce que** chaque ensemble de fonctions comprend trois fonctions qui sont attribuées aux boutons (48.1, 48.2, 48.3) de trois points de contact (46) adjacents, en particulier aux boutons dont les points de contact (46) ont été générés par le pouce, l'index et le majeur de la main de l'utilisateur.

7. Procédé selon l'une des revendications précédentes, **caractérisé en ce qu'**il est reconnu avec quel doigt la surface de sélection (42) et/ou la surface de commande (43) est commandée, la fonction et/ou l'ensemble de fonctions étant sélectionné(e) en fonction du doigt utilisé.

8. Procédé selon l'une des revendications précédentes, **caractérisé en ce que** la main avec laquelle la surface de sélection (42) et/ou la surface de commande (43) est commandée est reconnue, la fonction et/ou l'ensemble de fonctions étant sélectionné(e) en fonction de la main utilisée.

9. Interface homme-machine pour un véhicule, laquelle est notamment aménagée de manière à mettre en œuvre le procédé selon l'une des revendications précédentes, comprenant une unité de contrôle (34) et au moins une surface de sélection (42) qui est réalisée sous forme de surface tactile (32), et au moins une surface de commande (43) qui est réalisée sous forme de surface tactile (32), ladite au moins une surface de sélection (42) et ladite au moins une surface de commande (43) étant séparées l'une de l'autre et étant reliées à l'unité de contrôle (34) pour la transmission de données,
au moins un bouton (48) auquel est attribuée une fonction qui est sélectionnée en fonction du nombre de doigts sur ladite au moins une surface de sélection (42) étant prévu sur la surface de commande (43) pendant le fonctionnement de l'interface homme-machine (30).

10. Interface homme-machine selon la revendication 9, **caractérisée en ce que** la surface de sélection (42) et/ou la surface de commande (43) présente(nt) un contrôleur de surface (44) qui reconnaît le nombre et l'emplacement d'au moins un contact sur la surface de sélection (42) ou la surface de commande (43) qui lui est attribuée, le contrôleur de surface (44) étant relié à l'unité de contrôle (34) pour transmettre le nombre et l'emplacement dudit au moins un contact sur la surface tactile (32) qui lui est attribuée.

11. Interface homme-machine selon la revendication 9 ou 10, **caractérisée en ce que** la position du bouton (48) est déterminée par l'unité de contrôle (34) de sorte que lors du contact de la surface de commande (43) en un point de contact arbitraire (46), la position du bouton (48) est réglée par l'unité de commande (34) sur le point de contact (46) qui a été contacté.

12. Interface homme-machine selon l'une des revendications 9 à 11, **caractérisée en ce que** ledit au moins un bouton (48) est apte à être commandé par un nouveau contact, une augmentation de la pression et/ou un déplacement du point de contact (46).

13. Interface homme-machine selon l'une des revendications 9 à 12, **caractérisée en ce que** la surface de sélection (42) et la surface de commande (43) sont prévues de différents côtés d'un siège (14, 16), en particulier du siège (14) du conducteur.

14. Interface homme-machine selon l'une des revendications 9 à 13, **caractérisée en ce que** l'interface homme-machine (30) présente au moins un composant de véhicule (10, 12, 14, 16, 18, 20, 22, 24, 26, 28), la surface de sélection (42) et la surface de commande (43) étant agencées sur ledit au moins un composant de véhicule (10, 12, 14, 16, 18, 20, 22, 24, 26, 28), en particulier plusieurs composants de véhicule (10, 12, 14, 16, 18, 20, 22, 24, 26, 28) étant prévus, la surface de sélection (42) et la surface de commande (43) étant agencées sur différents composants de véhicule (10, 12, 14, 16, 18, 20, 22, 24, 26, 28), en particulier le composant de véhicule (10) étant un volant (12), un siège (14, 16), un levier de commande (28), un panneau de porte (18), un accoudoir (20), une partie d'une console centrale (24), une partie d'un tableau de bord (22) et/ou une partie d'un habillage de plafond (26).

15. Interface homme-machine selon l'une des revendications 9 à 14, **caractérisée en ce que** l'interface homme-machine (30) présente un écran de sortie (36) qui est agencé de manière spatialement séparée de la surface de sélection (42), de la surface de commande (43) et/ou du composant de véhicule (10, 12, 14, 16, 18, 20, 22, 24, 26, 28), la fonction dudit au moins un bouton (48) étant affichée sur l'écran de sortie (36).
